# EUROPEAN PATENT APPLICATION

(11) **EP 3 629 128 A1**
(43) Date of publication of application: **01.04.2020**
(21) Application number: 18020465.3
(22) Date of filing: 25.09.2018
(51) Int. Cl.: G06F 3/01

(54) **USER DEVICE AND METHOD FOR GENERATING HAPTIC FEEDBACK IN A USER DEVICE**

(71) Applicant: Vestel Elektronik Sanayi ve Ticaret A.S., 45030 Manisa (TR)
(72) Inventor: Kírísken, Barbaros, 45030 Manisa (TR)
(74) Representative: Flint, Adam

(57) **Abstract**

A user device (10) comprises a user interface (12) comprising a touch screen having a slider function; a vibration actuator (22) for generating vibrations; an actuator driver (20) for driving the vibration actuator (22) by a driving pattern (30); and a controller (16) for detecting operation of the slider function (122) by a user and controlling the actuator driver (20) to drive the vibration actuator (22) to provide haptic feedback when an operation of the slider function (122) is detected. The vibration actuator (22) is driven by a driving pattern (30) having a series of successive driving pulses (32a, 32b, 32c, ...) each comprising a rising edge (34) and a falling edge (36) having different slopes. This results in a significant haptic feedback having an alternating sharp and soft ticking effect when a user moves his/her finger over the touchscreen.

## Description

### Technical Field

The present disclosure relates to a user device comprising a user interface comprising a touch screen having a slider function, and a method for generating haptic feedback in a user device comprising a user interface comprising a touch screen having a slider function.

### Background

Haptic technology (also called kinaesthetic technology) encompasses hardware and methods to enable a device to provide tactile stimulation to a user. In one such example, a user device may vibrate in a manner which can be felt by the user and thus alert the user to notifications on the device. Vibrations may also be used as a haptic feedback for a user's operation of a touchscreen of the device.

The user devices, such as mobile phones, smartphones and tablet computers, etc., usually comprise a vibration actuator to generate vibrations. The vibration actuator is driven by an actuator driver in response to a control signal from a controller of the device at the appropriate time. Various types of vibration actuators are available which include: linear resonant actuators (LRAs) which generate vibrations by moving a mass in a linear manner (e.g. via an electromagnetic force); eccentric rotating mass (ERM) actuators which generate vibrations by spinning an off-centre weight; and piezo actuators which generate vibrations by deforming a piezoelectric element using an applied voltage.

The user devices also comprise a user interface comprising a touchscreen. Nowadays, the touchscreens usually also have a slider function for operating and controlling the device. The conventional user devices, however, do not have an appropriate haptic feedback for such a slider function.

### Summary

According to a first aspect disclosed herein, there is provided a user device comprising: a user interface comprising a touch screen having a slider function; a vibration actuator for generating vibrations; an actuator driver for driving the vibration actuator by a driving pattern; and a controller for detecting operation of the slider function by a user and controlling the actuator driver to drive the vibration actuator to provide haptic feedback when an operation of the slider function is detected. The actuator driver is configured to drive the vibration actuator by a driving pattern having a series of successive driving pulses, wherein each of these driving pulses comprises a rising edge and a falling edge having different slopes.

The user device may be e.g. a mobile phone, a smartphone, a tablet or a laptop computer, etc.

By driving the vibration actuator by a driving pattern having a series of successive driving pulses having different slopes of their rising and falling edges, a significant haptic feedback can be provided when a user moves his/her finger over the touchscreen. Especially, the vibration course generated by the vibration actuator has an alternating sharp and soft ticking effect due to the transitions between two successive driving pulses having different slopes of their rising and falling edges. The haptic feedback can be provided easily and without complex hardware. Also, only one vibration actuator is needed to provide the haptic feedback.

In an example, the driving pulses of the driving pattern have rising edges having a greater slope and falling edges having a smaller slope.

In an example, the actuator driver is configured to drive the vibration actuator by a driving pattern having a series of successive driving pulses, wherein a next driving pulse of the driving pattern is started before a previous driving pulse of the driving pattern is finished. By this configuration, a more significant haptic feedback having an alternating sharp and soft ticking effect can be provided when a user moves his/her finger over the touchscreen.

In an example, the actuator driver is configured to drive the vibration actuator by a driving pattern having a constant frequency of the driving pulses. As a result, the vibration course generated by the vibration actuator has a periodic ticking effect.

In an example, the actuator driver is configured to drive the vibration actuator by a driving pattern having a series of successive driving pulses all having the same shape.

In an example, the vibration actuator is a linear resonant actuator (LRA). Especially, the linear resonant actuator has a single coil and a single resonating mass.

According to a second aspect disclosed herein, there is provided a method for generating haptic feedback in a user device comprising a user interface comprising a touch screen having a slider function, which method comprises the steps of: detecting operation of the slider function by a user; and driving a vibration actuator to provide haptic feedback when an operation of the slider function is detected, wherein the vibration actuator is driven by a driving pattern having a series of successive driving pulses, wherein each of the driving pulses comprises a rising edge and a falling edge having different slopes.

In an example, the driving pulses of the driving pattern have rising edges having a greater slope and falling edges having a smaller slope.

In an example, the vibration actuator is driven by a driving pattern having a series of successive driving pulses, wherein a next driving pulse of the driving pattern is started before a previous driving pulse of the driving pattern is finished.

In an example, the vibration actuator is driven by a driving pattern having a constant frequency of the driving pulses.

In an example, the vibration actuator is driven by a driving pattern having a series of successive driving pulses all having the same shape.

In an example, a linear resonant actuator (LRA) is used as the vibration actuator.

According to a third aspect disclosed herein, there is provided a computer program comprising a program code which, when executed by a processor, implements the above described method for generating haptic feedback in a user device comprising a user interface comprising a touch screen having a slider function.

### Brief Description of the Drawings

To assist understanding of the present disclosure and to show how embodiments may be put into effect, reference is made by way of example to the accompanying drawings in which:
Figure 1 shows schematically the configuration of an example of a user device according to an embodiment of the present disclosure; and
Figure 2 shows a diagram explaining an example of a driving pattern according to an embodiment of the present disclosure.

### Detailed Description

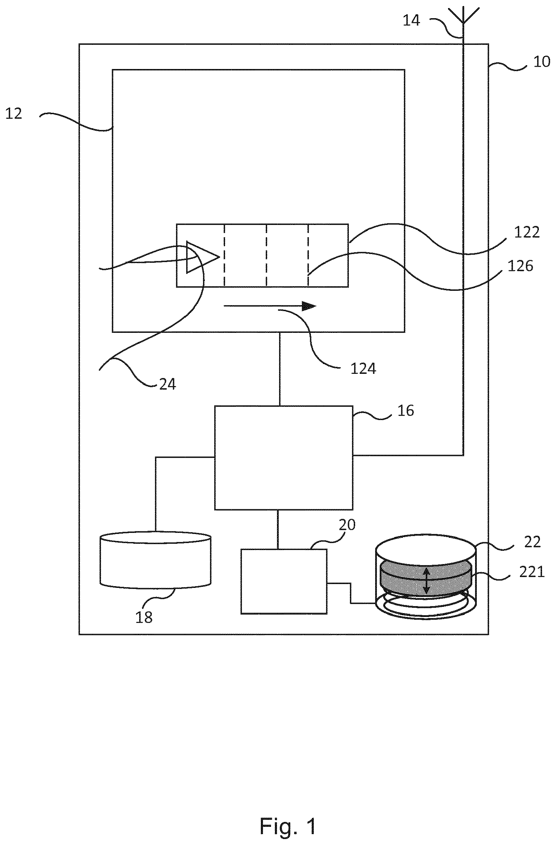

Figure 1 shows an exemplary embodiment of a user device 10 according to the present disclosure. The user device 10 may be a mobile device, such as for example a smartphone, a tablet computer, a laptop computer, etc. In other examples, the user device 10 may be a display device, having a display screen, such as for example an "interactive display screen".

The user device 10 comprises a user interface 12, a communications interface 14, a controller 16, a data storage 18, an actuator driver 20, and a vibration actuator 22. The controller 16 is operatively coupled to each of the user interface 12, the communications interface 14, the data storage 16, and the actuator driver 20. The actuator driver 20 is operatively coupled to the vibration actuator 22.

The user interface 12 allows a user to interact with the device 10. The user interface 12 is a touchscreen which can both display graphical content to the user and receive user input via touch input (e.g. by the user's finger 24). Further, the touchscreen of the user interface 12 has a slider function 122 to receive user input via moving the user's finger 24 in a direction 124 over the touchscreen.

The communications interface 14 allows the device 10 to send and receive data to and from external sources. If the user device 10 is a smartphone, the communications interface 14 also allows the device 10 to make calls. For example, the communications interface 14 may connect to a cellular network for the provision of cellular calls, may connect to a network such as the Internet for downloading and/or uploading content, or both.

The data storage 18 is configured to store data such as applications to be run on the processor controller 16. The data storage 18 may be provided by a single device or by plural devices. Suitable devices include for example a hard disk and nonvolatile semiconductor memory.

The controller 16 may be a microprocessor. The controller or controller system 16 referred to herein may in practice be provided by a single chip or integrated circuit or plural chips or integrated circuits, optionally provided as a chipset, an application-specific integrated circuit (ASIC), field-programmable gate array (FPGA), digital signal processor (DSP), graphics processing units (GPUs), etc. The chip or chips may comprise circuitry (as well as possibly firmware) for embodying at least one or more of a data processor or processors, a digital signal processor or processors, baseband circuitry and radio frequency circuitry.

The vibration actuator 22 in this example is a linear resonant actuator (LRA) comprising a single resonant mass 221 linearly movable within a housing via electromagnetic force generated by a single coil. That is, an electric current supplied to the LRA 22 results in an electromagnetic field being generated which exerts a force on the mass 221 and thereby moves the mass 221. Hence, providing an alternating current (AC) to the LRA 22 results in the mass 221 moving back and forth, vibrating. The amplitude of vibrations produced by the LRA 22 depends on the driving (AC) frequency and the resonant frequency of the LRA 22 itself, with the largest amplitude being exhibited when the LRA 22 is driven at its resonant frequency.

The actuator driver 20 is configured to drive the LRA 22 with an AC drive signal substantially at (preferably within a few hertz of) the resonant frequency of the LRA 22. The actuator driver 20 receives a control signal from the controller 16 and, in response, drives the LRA 22.

The controller 16 is configured to detect a user's operation of the slider function 122 of the touchscreen of the user interface 12 by moving his/her finger 24 in a direction 124 over the touchscreen. When detecting a user's operation of the slider function 122, the controller 16 sends a control signal to the actuator driver 20 to drive the LRA 22 for providing a haptic feedback for the user.

In addition, the LRA 22 may also be used to provide a haptic feedback for the user when operating a touchbutton function of the touchscreen of the user interface 12, a haptic alert to notifications on the device 10, a haptic alert to incoming calls or messages, etc.

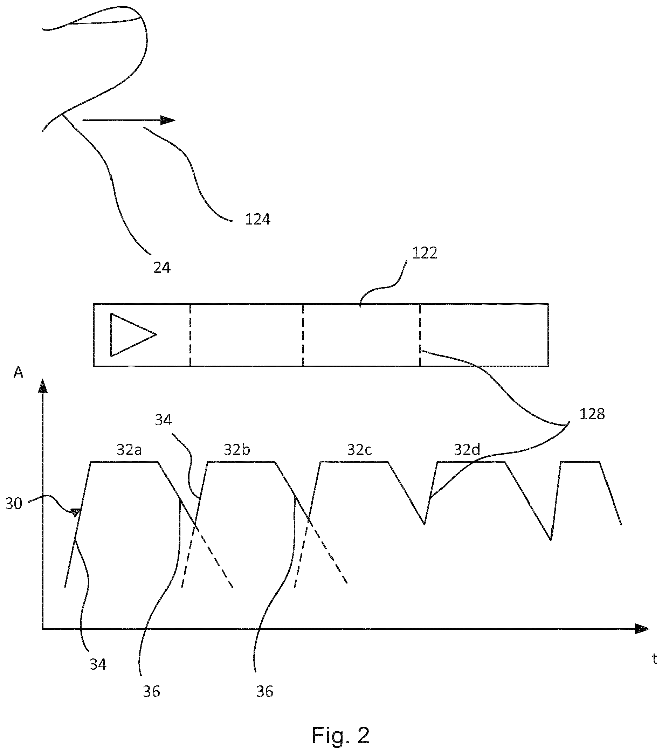

Figure 2 illustrates an example of the driving pattern 30 driving the LRA 22 for providing a haptic feedback for a user when operating the slider function 122 of the touchscreen of the user interface 12 by moving a finger 24 in a direction 124 over the touchscreen.

As shown in Figure 2, the driving pattern 30 has a series of successive driving pulses 32a, 32b, 32c, ..., wherein each of these driving pulses 32a, 32b, 32c, ... comprises a rising edge 34 and a falling edge 36. As indicated in Figure 2, the rising and falling edges 34, 36 of the driving pulses 32a, 32b, 32c, ... have different slopes. Especially, in this example the rising edges 34 have a greater slope and the falling edges 36 have a smaller slope. In other examples, the rising edges 34 have a smaller slope and the falling edges 36 have a greater slope.

In an example, all driving pulses 32a, 32b, 32c, ... of the driving pattern 30 have the same shape. In addition, the driving pattern 30 in an example has a constant frequency of the driving pulses 32a, 32b, 32c, ...

Further, as shown in Figure 2, in the series of the successive driving pulses 32a, 32b, 32c, ..., a next driving pulse 32n+1 of the driving pattern 30 is started before a previous driving pulse 32n of the driving pattern 30 is finished.

As a result of such a driving pattern 30 for driving the LRA 22, the LRA 22 provides vibrations as a haptic feedback for user when the user operates the slider function 122 of the touchscreen of the device 10 by moving a finger 24 in a direction 124 over the touchscreen, wherein the haptic feedback is very significant and has a periodic and alternating sharp and soft ticking effect 128.

One LRA 22 is sufficient to provide the above-described haptic feedback for a user operating a slider function 122 of a user interface 12 of a user device 10. Nevertheless, the user device 10 of the present disclosure can also comprise more than one LRA 22 to provide haptic feedback.

The examples described herein are to be understood as illustrative examples of embodiments of the invention. Further embodiments and examples are envisaged. Any feature described in relation to any one example or embodiment may be used alone or in combination with other features. In addition, any feature described in relation to any one example or embodiment may also be used in combination with one or more features of any other of the examples or embodiments, or any combination of any other of the examples or embodiments. Furthermore, equivalents and modifications not described herein may also be employed within the scope of the invention, which is defined in the claims.

## Claims

1. A user device (10), comprising:
a user interface (12) comprising a touch screen having a slider function (122);
a vibration actuator (22) for generating vibrations;
an actuator driver (20) for driving said vibration actuator (22) by a driving pattern (30); and
a controller (16) for detecting operation of said slider function (122) by a user and controlling said actuator driver (20) to drive said vibration actuator (22) to provide haptic feedback when an operation of said slider function (122) is detected,
wherein said actuator driver (20) is configured to drive said vibration actuator (22) by a driving pattern (30) having a series of successive driving pulses (32a, 32b, 32c, ...), wherein each of said driving pulses (32a, 32b, 32c, ...) comprises a rising edge (34) and a falling edge (36) having different slopes.

2. A user device according to claim 1, wherein the driving pulses (32a, 32b, 32c, ...) of the driving pattern (30) have rising edges having a greater slope and falling edges having a smaller slope.

3. A user device according to claim 1 or claim 2, wherein said actuator driver (20) is configured to drive said vibration actuator (22) by a driving pattern (30) having a series of successive driving pulses (32a, 32b, 32c, ...), wherein a next driving pulse (32n+1) of said driving pattern (30) is started before a previous driving pulse (32n) of said driving pattern (30) is finished.

4. A user device according to any of claims 1 to 3, wherein said actuator driver (20) is configured to drive said vibration actuator (22) by a driving pattern (30) having a constant frequency of the driving pulses (32a, 32b, 32c, ...).

5. A user device according to any of claims 1 to 4, wherein said actuator driver (20) is configured to drive said vibration actuator (22) by a driving pattern (30) having a series of successive driving pulses (32a, 32b, 32c, ...), wherein said driving pulses (32a, 32b, 32c, ...) all have the same shape.

6. A user device according to any of claims 1 to 5, wherein said vibration actuator (22) is a linear resonant actuator.

7. A method for generating haptic feedback in a user device (10) comprising a user interface (12) comprising a touch screen having a slider function (122), the method comprising:
detecting operation of said slider function (122) by a user; and
driving a vibration actuator (22) to provide haptic feedback when an operation of said slider function (122) is detected,
wherein said vibration actuator (22) is driven by a driving pattern (30) having a series of successive driving pulses (32a, 32b, 32c, ...), wherein each of said driving pulses (32a, 32b, 32c, ...) comprises a rising edge (34) and a falling edge (36) having different slopes.

8. A method according to claim 7, wherein the driving pulses (32a, 32b, 32c, ...) of the driving pattern (30) have rising edges having a greater slope and falling edges having a smaller slope.

9. A method according to claim 7 or claim 8, wherein said vibration actuator (22) is driven by a driving pattern (30) having a series of successive driving pulses (32a, 32b, 32c, ...), wherein a next driving pulse (32n+1) of said driving pattern (30) is started before a previous driving pulse (32n) of said driving pattern (30) is finished.

10. A method according to any of claims 7 to 9, wherein said vibration actuator (22) is driven by a driving pattern (30) having a constant frequency of the driving pulses (32a, 32b, 32c, ...).

11. A method according to any of claims 7 to 10, wherein said vibration actuator (22) is driven by a driving pattern (30) having a series of successive driving pulses (32a, 32b, 32c, ...), wherein said driving pulses (32a, 32b, 32c, ...) all have the same shape.

12. A method according to any of claims 7 to 11, wherein a linear resonant actuator is used as said vibration actuator (22).

13. A computer program comprising a program code which, when executed by a processor, implements a method according to any of claims 7 to 12 for generating haptic feedback in a user device (10) comprising a user interface (12) comprising a touch screen having a slider function (122).
